# EUROPEAN PATENT APPLICATION

(11) **EP 1 561 548 A1**
(43) Date of publication of application: **10.08.2005**
(21) Application number: 05100689.8
(22) Date of filing: 01.02.2005
(51) Int. Cl.: B25G 1/10, B25G 1/00, B26B 3/00

(54) **Rivet and handle particularly for pieces of cutlery and the like provided with the rivet**

(30) Priority: 05.02.2004 IT PD20040007 U
(71) Applicant: SILCON PLASTIC S.r.l., 32012 Forno di Zoldo (Belluno) (IT)
(72) Inventor: Costantin, Arcangelo, 32012, FORNO DI ZOLDO BL (IT); Battistin, Pietro, 32012, FORNO DI ZOLDO BL (IT)
(74) Representative: Modiano, Guido, Dr.-Ing.

(57) **Abstract**

A rivet (10), which has, on at least one of its heads (11), a treated or untreated surface (12), which can be provided with ornamental, decorative or distinctive markings (13) and is covered by a protective layer (14). The layer (14) can be treated at least partially. Advantageously, the layer (14) is part of a coating (15) of the head (11), which is obtained by overmolding plastic material on the head (11).

## Description

The present invention relates to a rivet.

The invention also relates to a handle, particularly but not exclusively for pieces of cutlery and the like, provided with said rivet.

Pieces of cutlery, and particularly knives, are currently used daily in which the handle is composed of two parts, which have an ergonomic profile and enclose in a sandwich-like fashion a plate-like tab of said piece of cutlery.

The two parts are fixed to the plate-like tab and are fixed to each other by means of at least one connecting element or rivet, which is inserted in a complementarily shaped seat that passes through the two parts and the interposed plate-like tab.

In the case of a kitchen knife, the plate-like tab is known as a tang, while each of the two parts having an ergonomic profile that enclose the tang are known as cheeks.

During the final step of the assembly of a knife of the type described above, the cheeks are fixed to the tang by means of rivets and then the handle, formed by the two cheeks, and the blade are both subjected to surface finishing treatments (grinding, polishing and the like).

These treatments on the handle do not allow to apply distinctive, decorative or ornamental surface markings to the handle.

Such surface markings are in fact removed completely or partially by the above cited mechanical treatments.

It is equally disadvantageous to apply to the handles of pieces of cutlery, at the end of all the treatments, transfers, stickers and the like, which are removed rapidly by prolonged use and by consequent washing.

The aim of the present invention is to provide a rivet that is capable of associating with the usual connecting function an improved resistance to wear, corrosion, oxidation and rust, as well as an ornamental, decorative or distinctive content.

Within this aim, an object of the present invention is to provide a rivet that is suitable to be used particularly but not exclusively in handles of pieces of cutlery and the like.

Another object of the present invention is to provide a rivet that can be fitted easily on cheeks and tangs that are already commercially available and of a known type.

Another object of the present invention is to provide a rivet that can be obtained cheaply even from rivets of a known type.

Another object of the present invention is to provide a handle particularly but not exclusively for pieces of cutlery and the like that is provided with at least one rivet.

Another object of the present invention is to provide a rivet and a handle provided with at least one of said rivets that can be both produced cheaply with known systems and technologies.

This aim and these and other objects that will become better apparent hereinafter are achieved by a rivet, characterized in that it has, on at least one of its heads, a surface that is covered by a protective layer that can be treated at least partially.

Further characteristics and advantages of the present invention will become better apparent from the following detailed description of a preferred but not exclusive embodiment thereof, illustrated by way of nonlimiting example in the accompanying drawings, wherein:
Figure 1 is a view of a rivet according to the invention, applied to the handle of a knife;
Figure 2 is a sectional view of a detail of a handle according to Figure 1;
Figure 3 is a sectional view of part of a rivet according to the invention in a first step of its assembly;
Figure 4 is a sectional view of part of a rivet according to the invention in a second step of its assembly;
Figure 5 is a partially sectional perspective view of a detail of a rivet according to the invention.

With reference to the figures, a rivet according to the invention is generally designated by the reference numeral 10.

The rivet 10 is provided, on a first head 11, with a surface 12.

The surface 12 may have, selectively or in combination, a surface treatment that is protective or provides a particular aesthetic value or, as in the embodiment given here by way of example, ornamental, decorative or distinctive markings 13.

The surface 12 can also be the original surface of the head 11 of the rivet 10, without any surface treatment and without markings 13.

The protective surface treatment can be of the antioxidant type, of the rustproofing type, and the like.

The surface 12, either plain or with its surface treatment or with the markings 13 thereon, is covered by a protective layer 14.

The layer 14 can be treated at least partially.

The layer 14 is part of a coating 15 of the first head 11, which is obtained by overmolding the first head 11 with plastic material.

In the example described here, the layer 14, and therefore the plastic material with which the coating 15 is obtained, is transparent.

The rivet 10 described here is constituted by a first male portion 16, provided with the first head 11, and by a second female portion 17, provided with a second head 18.

The present invention also relates to a handle that is particularly but not exclusively for pieces of cutlery and the like.

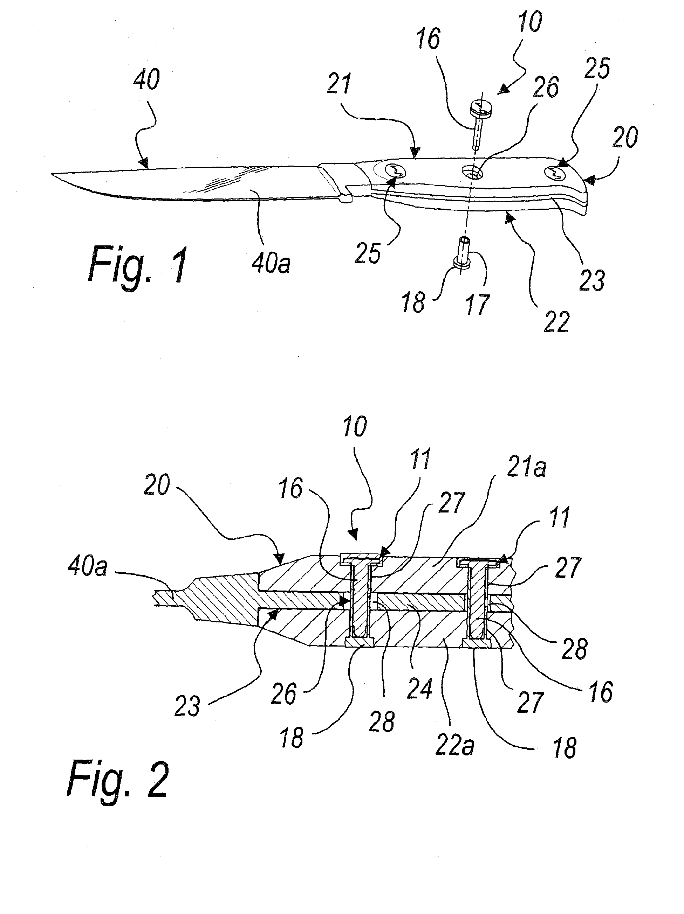

Such handle, designated by the reference numeral 20 in Figure 1, is composed of two parts 21 and 22 that have an ergonomic profile.

The handle 20 belongs to a knife 40.

The two parts 21 and 22 are therefore constituted by two cheeks, designated respectively by the reference numerals 2 1 a and 22a.

The cheeks 21 a and 22a enclose in a sandwich-like fashion a plate-like tab 23 of the blade 40a of the knife 40.

The plate-like tab 23 is constituted, for the knife 40, by a tang 24.

The two cheeks 21a and 22a are fixed to the tang 24 and to each other by means of three connecting elements 25, each of which is mated in a complementarily shaped seat 26 that passes through the cheeks 21 a and 22a and through the interposed tang 24.

The handle 20 is characterized in that at least one of the three connecting elements 25 is constituted by a rivet 10 as described above.

The assembly sequence is as follows:
- the tang 24 is closed between the two cheeks 21 a and 22a so that the first holes 27 on the cheeks 21a and 22a and the second holes 28 on the tang are coaxial and form the seats 26;
- the second female portions 17 are inserted in the seats 26;
- the first male portions 16 are inserted from the opposite side and forced inside the second female portions 17.

At this point, the first head 11 of each rivet 10, provided with a surface 12 that bears the markings 13, is in relief with respect to the cheek 21 a in which it is accommodated.

At this point the knife 40 is subjected to the final surface treatments:
- the handle 20 is ground and polished.

These last operations remove a surface layer of material both from the cheek 21a and from the layer 14 of the head 11 that protrudes from the cheek 21 a.

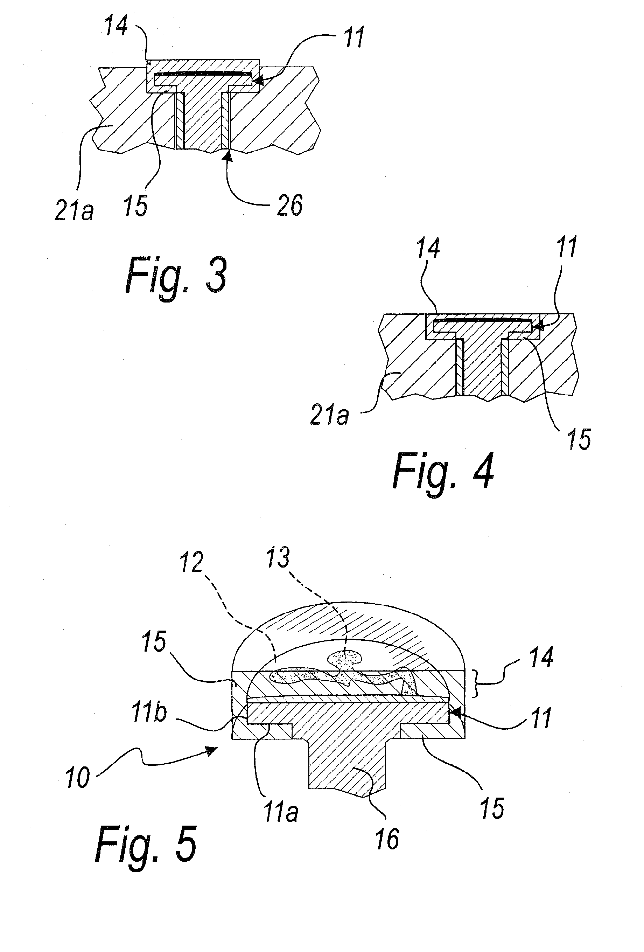

The head 11 before final mechanical surface treatments, is shown in Figure 3, while the head 11 after the treatments is shown in Figure 4.

It is thus evident that the transparent layer 14 has a thickness that ensures protection of the surface 12, with or without surface treatments or markings 13.

A residue 14a of the layer 14 in fact remains so as to cover the surface 12.

A rivet 10 according to the invention allows not only to apply distinctive, ornamental or decorative markings 13 but at the same time protects said markings from the corrosive action of water and detergents by which the handle 20 is affected during washing.

Conveniently, the surface 12, with or without the treatment and/or the markings 13, is in fact completely enclosed in the coating 15 as described above.

The coating 15 in fact incorporates the entire head 11, including the lower face 11a and the lateral surface 11b.

Further, a rivet 10 according to the invention is well-suited to be assembled to a handle of a piece of cutlery, such as the knife 40, or to a handle of another implement, tool or the like that for any reason has to stay in contact with liquids, also by way of the antioxidant galvanic treatment to which its first male portion 16 and its second female portion 17 are subjected.

In practice it has been found that the invention thus described solves the problems noted in known types of rivet.

In particular, the present invention provides a rivet that is capable of combining with the usual connecting function an improved resistance to wear, corrosion, oxidation and rust, as well as a particular ornamental, decorative or distinctive content.

Moreover, the present invention provides a rivet that is suitable to be used particularly but not exclusively in handles of pieces of cutlery, scissors and the like and even more particularly in implements and tools obtained by forging and accordingly provided not only with a technical value but also with an important aesthetic value.

Moreover, the present invention provides a rivet that can be installed easily in cheeks and tangs that are already commercially available and of a known type.

Further, the present invention provides a handle, particularly but not exclusively for pieces of cutlery and the like, that is provided with at least one rivet.

Moreover, the present invention provides a rivet and a handle provided with at least one such rivet that can be manufactured economically with known systems and technologies.

The invention thus conceived is susceptible of numerous modifications and variations, all of which are within the scope of the appended claims, all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2004U000007 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A rivet, **characterized in that** it has, on at least one of its heads (11), a surface (12) that is covered by a protective layer (14) that can be treated at least partially.

2. The rivet according to claim 1, **characterized in that** said layer (14) is part of a coating (15) of said head (11), which is obtained by overmolding said head (11) with plastic material.

3. The rivet according to one or more of the preceding claims, **characterized in that** said surface (12) is provided with a protective treatment.

4. The rivet according to one or more of the preceding claims, **characterized in that** said surface (12) is provided with ornamental, decorative or distinctive markings (13).

5. The rivet according to one or more of the preceding claims, **characterized in that** said coating (15) is transparent.

6. The rivet according to one or more of the preceding claims, **characterized in that** it is constituted by a first male portion (16), provided with a first head (11), and by a second female portion (17), which is provided with a second head (18), said first head (11) being provided with said surface (12) that has ornamental, decorative or distinctive markings (13) and said transparent coating (15).

7. A handle particularly but not exclusively for pieces of cutlery and the like, of the type composed of two parts (21, 22, 21a, 22a) having an ergonomic profile, which enclose in a sandwich-like fashion a plate-like tab (23, 24) of said piece of cutlery (40) or the like, said two parts (21, 22, 21a, 22a) being fixed to said plate-like tab (23, 24) and to each other by means of at least one connecting element (25), which is engaged in a complementarily shaped seat (26) that passes through said two parts (21, 22, 21a, 22a) and through said interposed plate-like tab (23, 24), said handle (20) being **characterized in that** at least one of said at least one connecting elements (25) is constituted by a rivet (10) that is provided, on at least one of its heads (11), with a surface (12) that is covered by a protective layer (14) that can be treated at least partially.
